**Europäisches Patentamt**

**European Patent Office**

**Office européen des brevets**

(11) Publication number: **0 117 615**
**B1**

## EUROPEAN PATENT SPECIFICATION

(45) Date of publication of patent specification: **24.06.87**

(51) Int. Cl.⁴: **B 60 T 8/22**

(21) Application number: **84300382.3**

(22) Date of filing: **23.01.84**

(54) Improvements to pressure proportioning valve.

(30) Priority: **25.01.83 GB 8301962**

(43) Date of publication of application:
**05.09.84 Bulletin 84/36**

(45) Publication of the grant of the patent:
**24.06.87 Bulletin 87/26**

(84) Designated Contracting States:
**AT BE CH DE FR IT LI NL SE**

(56) References cited:
**DE-B-2 622 797**
**GB-A-1 029 183**
**GB-A-1 585 108**
**GB-A-2 027 850**
**US-A-4 035 031**

(73) Proprietor: **BENDIX LIMITED**
**Douglas Road**
**Kingswood, Bristol BS15 2NL (GB)**

(72) Inventor: **Joseph, Ian N.**
**134 Blaisdon**
**Yate Avon (GB)**

(74) Representative: **Turner, Alan Reginald**
**BENDIX LIMITED Douglas Road**
**Kingswood, Bristol BS15 2NL (GB)**

Courier Press, Leamington Spa, England.

## Description

This invention relates to pressure proportioning valve devices and relates in particular to pressure proportioning valve devices the characteristics of which produce output pressures directly corresponding to input or control pressure up to a predetermined value before giving for higher values of control pressure an output pressure having a variable controllable relationship to the control pressure.

Such proportioning valve devices are of particular application in the control of vehicle fluid pressure braking systems for controlling braking pressure in accordance with vehicle load.

In the Specification of United Kingdom Patent No. 1,585,108 there is disclosed a pressure proportioning valve device according the first parts of claims 1 and 2 especially for variable load control of braking pressure wherein in order to overcome stiction and return spring resistance in a brake mechanism when a brake application is commenced, the output pressure follows a controlling pressure up to a given pressure value before the valve device commences to proportion the output in accordance with a load setting. In order to achieve this a pressure responsive member of the proportioning valve device is acted upon via an inshot valve with a counteracting pressure up to a given value. Furthermore, the inshot valve is arranged to progressively diminish the inshot pressure through the operating output pressure range of the proportioning valve so that it does not detrimentally affect the ratio of the proportioning valve device more especially for low load settings.

An object of the present invention is to provide simpler means for achieving such initial output pressure corresponding to the input pressure up to a pre-determined value before giving an output pressure in accordance with a variable ratio setting.

The present invention provides in a first aspect thereof a pressure proportioning valve device comprising a housing including control means operable to adjust the position in the housing of a vent valve seat said seat being a vent valve seat of a lappable double valve assembly carried by moveable pressure responsive means, one pressure responsive area of which is subject to an input pressure and another opposing pressure responsive area of which is subject to a delivered pressure one said area being a variable effective area dependent upon the position of said pressure responsive means in the housing said vent valve seat being coupled to said control means by a further pressure responsive member subject to a said pressure characterised in that said further pressure responsive member is so biassed that for pressures up to a pre-determined value of the delivered pressure the lapping position of said double valve assembly is unaltered whereas for pressure values beyond said value the lapping position changes thereby altering said varying effective area in the lapping position in a sense to assist the effect of the delivered pressure.

The present invention further provides in a second aspect thereof a pressure proportioning valve device comprising a housing including control means operable to adjust the position in the housing of a lappable double valve assembly, a vent valve seat for said double valve assembly being carried by a movable pressure responsive means having one area subject to an input pressure and another opposing area subject to a delivered pressure, said opposing area being a variable effective area dependent upon the position of said pressure responsive means in the housing, characterised in that said vent valve seat is carried by a further pressure responsive member which is slideably carried by the first mentioned pressure responsive means in the housing, characterised in that said vent valve seat is carried by a further pressure responsive member which is slidably carried by the first mentioned pressure responsive means and is subject to a said pressure and in that said further pressure responsive member is so biassed in relation to said first pressure responsive means that for pressures up to a pre-determined value of delivered pressure the lapping position in the housing of lapping of the double valve assembly is unaltered and for a range of pressure beyond said value the lapping position changes in a sense which is accompanied by a change of said area in a sense to assist the balancing effect of the delivered pressure at said lapping position.

In order that the invention may be more clearly understood and readily carried into effect, the same will be further described by way of example with reference to the accompanying drawings of which:

Fig. 1 illustrates a pressure proportioning valve device in accordance with a first embodiment of the invention,

Fig. 2 illustrates a pressure proportioning valve device in accordance with a second embodiment and,

Fig. 3 illustrates an operating characteristic to be referred to.

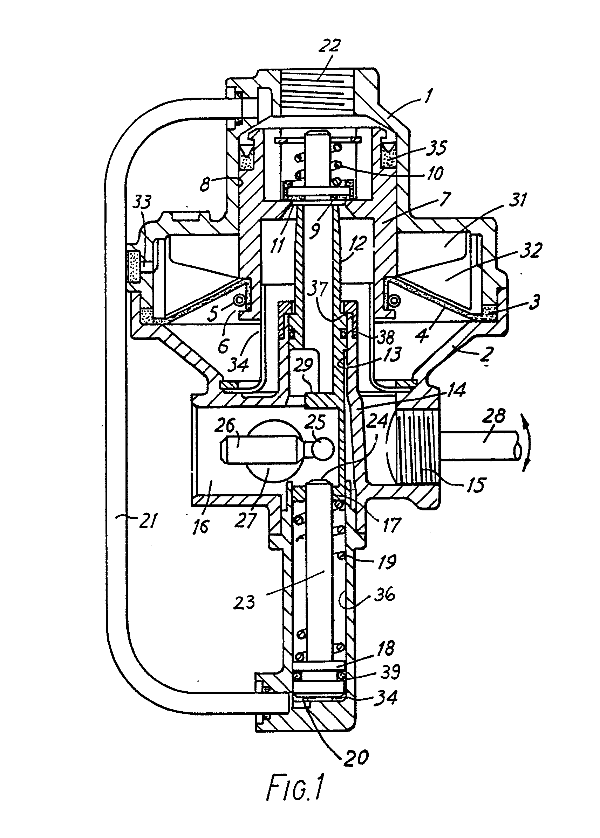

Referring to Fig. 1, the pressure proportioning valve device shown therein is designed for use as a variable load valve in fluid pressure operable braking systems. The device has a housing which comprises upper and lower body members denoted by references 1 and 2 respectively, bolted together to clamp the periphery 3 of a variable effective area diaphragm 4 a central bead 5 of which is retained in a groove 6 of the skirt of a piston with a seal 35 slideable in a cylindrical bore 8 of the body member 1 to define an area responsive to input pressure at a port 22. The piston 7 carries with it a double valve assembly including a valve member 9 which is spring loaded downwards by a spring 10 towards an inlet valve seat 11 formed on an annular flange within the piston. Projecting upwardly towards the double valve member 9 from a region beneath the piston 7 there is a tubular exhaust seat member 12 which is sealingly slideable in a bore 13 formed within the lower part of the housing. The piston 7 is guided by its seal 35 and a non-sealing guide member 34 and the underside of diaphragm 4 communicates with an output port 15 for delivered pressure.

The lower part of the housing incorporates a dividing wall 14 which separates the output port 15 of the device from a vented region 16. The tubular exhaust valve member 12 has a downwardly extending part 17 between the lower end of which and a piston 18 there is retained a biassing spring 19. Piston 18 has a seal 37 slideable in bore 36 of less diameter than the upper seal 38 of member 12 and bore 13. The seat member 12, the downward extension 17 thereof and other parts form a fluid pressure dependent operating means for the double valve assembly. The piston 18 slides in a cylinder bore 36 the lower end 20 of which communicates via a pipe 21 with the input port 22 for the device by which input pressure is applied to the piston 7. The piston 18 has an upwardly extending stem 23 the upper surface 24 of which is engageable with a ball-end 25 of a short pivotted control lever 26 operable through a bearing 27 in the casing by a longer external arm 28. The ball-end 25 is trapp-able between the surface 24 and an internal projection 29 in the exhaust valve member 12.

Referring briefly to the variable effective area diaphragm assembly this is of generally well-known form and comprises radially outwardly extending fingers 31 integral with the piston 7 inter-digitated with inwardly extending fingers 32 of an annular member inside the upper body member. The downwardly facing surfaces of fingers 31 and the downwardly facing surfaces of fingers 32 are mutually arranged at an angle whereby upon downward movement of the piston 7 from the position shown, the diaphragm 4 presents an increasing effective area to delivered pressure at the output port 15 acting beneath the diaphragm. The region above the diaphragm is vented via an aperture 33.

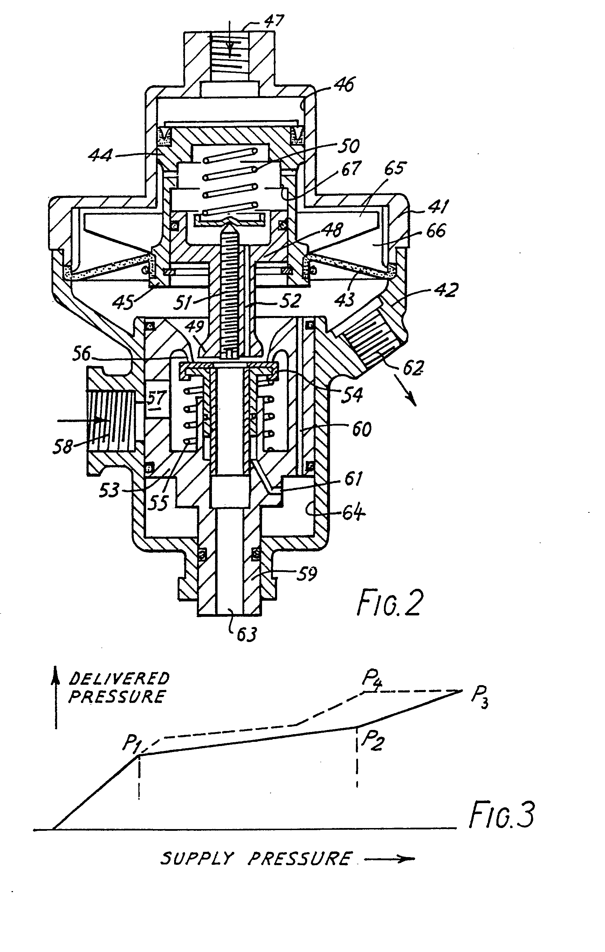

Referring now to the operation of the pressure proportioning valve device, with no pressure at the input port 22 and with an unloaded vehicle, the lever 28 is (say) in the position shown and the valve assembly takes up a position approximately as shown in Fig. 1, with the piston 18 resting against its stop 34 and with the member 12 against stop 34 by virtue of the spring 19. When input pressure at 22 begins to rise due to operation of a vehicle brake valve, after a small pressure increase, the piston 7 is slightly downwardly deflected to cause valve member 9 to seat against 12 unseating the valve member 9 from the seat 11. Input air pressure is thus applied via the unseated valve to the output port 15 and becomes effective on the underside of diaphragm 4. Owing to the bias effect of the spring 19, the tubular member 12 is retained over this first part of the characteristic in precisely the position shown regardless of the setting of lever 28. Output pressure therefore initially directly follows an initial input pressure range independent of the setting of lever 28 to provide a commencing operating pressure to a brake actuator up to a pre-determined input pressure at port 22 as indicated at P1 in Fig. 3 and which is dependent upon the bias of spring 19. Upon attainment of this pre-determined downward acting input pressure, at port 22 the pressure at port 15 acting across the area of 12 causes the exhaust valve member 12 to begin to move downwards against the action of spring 19 followed by the piston 7. Simultaneously, the input pressure communicated via pipe 21 to the region 20, acts on the underside of piston 18 in a sense to cause it to rise against the effect of spring 19. This effects an increase in the upward force transmitted to member 12 by spring 19 and tends to prevent downward movement of this member such that a balanced condition is maintained with no movement occurring.

As the input pressure increases further, however, piston 7, valve member 9 and member 12 gradually move downward and piston 18 continues to rise. In this manner the lapping position of the valve assembly is moved in a sense to enhance the effective area of diaphragm 4 subject to delivered pressure. This will continue until at a second pre-determined input pressure, indicated at P2 in Fig. 3, the projection 29 of member 12 contacts ball end 25 whereupon further downward movement is prevented and the desired proportioning is as set by the lever 28 position.

At a certain input pressure equal to P3 which will depend upon the position of ball end 25, stem 23 of piston 18 comes into contact with the lower surface of ball end 25 trapping it between surface 24 and projection 29. This prevents excess stress being transmitted to lever 28 by the net downward force transmitted through lever 26 by member 12 when input pressures exceeds P3.

A subsequent reduction of input pressure is represented by the broken curve of Fig. 3. This causes piston 7 to rise thereby unseating the valve member 9 from the valve seat member 12 at a supply pressure (say) P4 to commence venting the region beneath diaphragm 4 to exhaust port 16.

When the delivered pressure is reduced to approximately P2, exhaust valve member 12 begins to rise to follow piston 7 thereby reducing the effective area of diaphragm 4 at the lapping position of the valve member 9. This reduces the degree of brake pressure proportioning achieved until member 12 meets the stop 37 at the effective area of diaphragm 4 is then at a minimum and the delivered pressure at port 15 is equal to the descending input pressure at port 22. This condition will then continue until both input pressure and delivery pressure are completely vented. The delivered pressure will stabilise at any steady pressure in the whole range to correspond with a stable input pressure.

From the foregoing it will be appreciated that by virtue of a pressure responsive means in the form of piston 12, which is responsive to a pre-determined level of input pressure to modify the position of the piston 7 whereat lapping of the double valve can occur, the output port pressure follows the input port pressure up to a given pressure value before proportioning of the output in relation to the input occurs accordingly to the adjustable ratio setting for the device.

Referring now to Fig. 2, this shows an alternative form of pressure proportioning valve in the form of a device designed to operate as a variably operable relay valve.

The device comprises an upper housing portion 41 and a lower housing portion 42 with an output port 62 for delivered pressure communicating with the underside of a diaphragm 43 clamped between the two housing portions similarly to the diaphragm of Fig. 1. Diaphragm 43 co-operates with two sets of interdigitated fingers 65 and 66 similar to those described above with reference to Fig. 1. Diaphragm 43 is thus part of a pressure responsive means and concentric therewith there is carried a skirt 45 of a piston 44 slideable in a cylindrical bore 46 in the upper part 41 of the housing and an input control port 47 communicating with the upper surface of piston 44. Sealingly slideable within the skirt 45 is a further pressure responsive member in the form of a smaller piston 48 carrying a downwardly projecting exhaust valve member 49 which co-operates with a moveable double valve assembly carried in the lower part of the housing. The piston 48 is downward biassed by virtue of a spring 50 trapped within the piston 45. The state of compression of spring 50 is adjustable by an adjusting screw 51. Furthermore, a vent passage 52 for the interior of piston 44 is provided alongside the adjusting screw 51. The piston 48 therefore constitutes part of a pressure responsive operating means for the double valve assembly.

Referring now to the double valve assembly, this is carried in a plunger 53 sealingly slideable in a cylindrical bore 64. A double valve member 54 is urged by a light spring 55 towards an input valve seat 56 to which communication is provided via an aperture 57 from an input or reservoir port 58. Although not shown, the plunger 53 has means for adjusting the vertical position of a sealingly slideable stem 59 for adjusting the ratio of the valve assembly. For the purposes of balancing pressures on the self-lapping valve arrangements, two small passages 60 and 61 are provided whereby the delivered pressure at output port 62 and acting under diaphragm 43 is communicated to the annulus 63 acting upwards on the double valve.

In operation of the pressure proportioning relay valve of Fig. 2 and with zero control pressure initially applied at port 47, the double valve is at rest with the member 49 against the valve member 54 and the valve member 54 being against the inlet valve seat 56. This is so under the influence of springs 50 and 55. When the input pressure at port 47 begins to rise this acts above the piston 44 which after overcoming the force of light spring 55 unseats the valve member from seat 56 thereby allowing air under pressure to be supplied from the reservoir via port 58 to an output port 62 and to the under-side of the diaphragm. Delivered pressure at port 62 therefore follows the input pressure at port 47. Upon attainment of a pre-determined pressure, say 0.7, bar the spring 50 begins to yield to the action of the piston 48 under the influence of the fluid pressure at the output port and this piston progressively moves with increasing input pressure towards its upper stop 67 in piston 44 thereby allowing the assembly to move downwards towards a lap position in a sense to enhance the effective area of the diaphragm subject to the delivered pressure at port 62.

By virtue of the piston 48 and spring 50 it is therefore seen that for a given load value, a change of the position of the pressure responsive assembly comprising diaphragm 43 and piston 44, whereat lapping of the double valve can occur, is conditional upon attainment of the pre-determining pressure acting on member 48. The delivered output pressure at port 62 follows the input pressure up to this pressure to apply a sufficient working pressure to a brake actuator before the device effects proportioning of the output pressure and the control pressure in accordance with the setting of the device by the positioning of the lower plunger 53 and valve assembly carried thereby in accordance with vehicle loading.

It will be seen from Fig. 1 and Fig. 2 that alternative embodiments of the invention may be devised wherein the device is either a direct pressure proportioning valve device by which input air pressure is delivered to an output port or is a pressure relay device by which input air pressure controls delivery of output pressure derived from a reservoir or other source. In addition, it will be observed that the pressure corresponding to the control pressure to which the further pressure responsive member responds, may either be the control pressure itself or alternatively, it may be the delivered pressure as in Fig. 1 or Fig. 3 or some other derivative thereof.

**Claims**

1. A pressure proportioning valve device comprising a housing including control means (25, 26, 27, 28) operable to adjust the position in the housing of a vent valve seat (12) said seat being a vent valve seat of a lappable double valve assembly (9, 10, 11, 12) carried by movable pressure responsive means (7, 4, 31, 35), one pressure responsive area of which is subject to an input pressure and another opposing pressure responsive area of which is subject to a delivered pressure one said area being a variable effective area dependent upon the position of said pressure responsive means in the housing, said vent valve seat (12) being coupled to said control means by a further pressure responsive member (20, 23) subject to a said pressure characterised in that said further pressure responsive member is so biassed that for pressures up to a pre-determined value of the delivered pressure the lapping position of said double valve assembly (9, 10, 11, 12) is unaltered whereas for pressure values beyond said value the lapping position changes thereby altering said variable effective area in the lapping position in a sense to assist the effect of the delivered pressure.

2. A pressure proportioning valve device comprising a housing (41, 42) including control means (59) operable to adjust the position in the housing of a lappable double valve assembly (49, 54, 56), a vent valve seat (49) for said double valve assembly being carried by a movable pressure responsive means (43, 44, 45) having one area subject to an input pressure and another opposing area subject to a delivered pressure, said opposing area being a variable effective area dependent upon the position of said pressure responsive means in the housing, characterised in that said vent valve seat (49) is carried by a further pressure responsive member (48) which is slidably carried by the first mentioned pressure responsive means and is subject to a said pressure and in that said further pressure responsive member is so biassed in relation to said first pressure responsive means that for delivered pressures up to a predetermined value the lapping position in the housing of lapping of the double valve assembly is unaltered and for a range of pressure beyond said value the lapping position changes in a sense which is accompanied by a change of said area in a sense to assist the effect of the delivered pressure at said lapping position.

3. A pressure proportioning valve device as claimed in claim 1 characterised in that said movable pressure responsive means comprises a piston (7) subject to said input pressure and a variable area diaphragm subject to the delivered pressure, said further pressure responsive member (23) comprising a piston (18) sealingly slideable in the housing and being subject to delivered pressure.

4. A pressure proportioning valve device as claimed in claim 2, characterised in that said movable pressure responsive means comprises a piston (44) subject to said input pressure and a variable area diaphragm subject to the delivered pressure, said further pressure responsive member 48 comprising a piston sealingly slideable in said piston (44) and being subject to the delivered pressure.

5. A pressure proportioning valve device as claimed in claim 3 characterised in that said further pressure responsive member (23) is biassed towards a stop (34) by a spring (19).

6. A pressure proportioning valve device as claimed in claim 4, characterised in that said double valve assembly (48, 54, 56) is carried in a body (53) sealingly movable in the housing (41, 42) for setting the proportioning of the device and having a passage (57) for communication with a fluid pressure supply port (58).

**Patentansprüche**

1. Druckdosierventil, umfassend ein Gehäuse mit einer Steuereinrichtung (25, 26, 27, 28), die betätigbar ist, um in dem Gehäuse die Position eines Entlüftungsventilsitzes (12) einzustellen, der ein Entlüftungsventilsitz eines überdeckbaren Doppelventilgebildes (9, 10, 11, 12) ist, das durch eine bewegbare auf Druck ansprechende Einrichtung (7, 4, 31, 35) getragen ist, von welcher eine auf Druck ansprechende Fläche einem Eingangsdruck, und eine andere gegenüberliegende auf Druck ansprechende Fläche einem gelieferten Druck unterworfen ist, wobei eine genannte Fläche eine variable wirksame Fläche ist abhängig von der Position der auf Druck ansprechenden Einrichtung in dem Gehäuse, und wobei der Entlüftungsventilsitz (12) mit der Steuereinrichtung über einen weiteren auf Druck ansprechenden Teil (20, 23) gekoppelt ist, der einem genannten Druck unterworfen ist, dadurch gekennzeichnet, daß der weitere auf Druck ansprechende Teil derart vorgespannt ist, daß für Drücke bis zu einem vorbestimmten Wert des gelieferten Drucks die Überdeckungsposition des Doppelventilgebildes (9, 10, 11, 12) unverändert bleibt, wohingegen für Druckwerte jenseits des genannten Wertes die Überdeckungsposition sich andern, so das die variable wirksame Fläche in der Überdeckungsposition in einem Sinn geändert wird, daß die Wirkung des gelieferten Drucks unterstützt wird.

2. Druckdosierventil, umfassend ein Gehäuse (41, 42) mit einer Steuereinrichtung (59), die betätigbar ist, um in dem Gehäuse die Position eines überdeckbaren Doppelventilgebildes (49, 54, 56) einzustellen, wobei ein Entlüftungsventilsitz (49) für das Doppelventilgebilde von einer bewegbaren auf Druck ansprechenden Einrichtung (43, 44, 45) getragen ist, die eine Fläche, die einem Eingangsdruck unterworfen ist, und eine andere gegenüberliegende Fläche hat, die einem gelieferten Druck unterworfen ist, die gegenüberliegende Fläche eine variable wirksame Fläche ist in Abhängigkeit von der Position der auf Druck ansprechenden Einrichtung in dem Gehäuse, dadurch gekennzeichnet, daß der Entlüftungsventilsitz (49) durch einen weiteren auf Druck ansprechenden Teil (48) getragen ist, der von der zuerst genannten auf Druck ansprechenden Einrichtung verschiebbar getragen und einem genannten Druck unterworfen ist, und daß der weitere auf Druck ansprechende Teil derart vorgespannt ist in Relation zu der ersten auf Druck ansprechenden Einrichtung, daß für gelieferte Drücke bis zu einem vorbestimmten Druckwert die Überdeckungsposition in dem Gehäuse des Überdeckens des Doppelventilgebildes unverändert ist, und für einen Druckbereich jenseits des genannten Wertes die Überdeckungsposition sich in einem Sinn ändert, die begleitet ist durch eine Änderung der genannten Fläche in einem Sinn, die Wirkung des gelieferten Druckes an der Überdeckungsposition zu unterstützen.

3. Druckdosierventil nach Anspruch 1, dadurch

5

gekennzeichnet, daß die bewegliche auf Druck ansprechende Einrichtung einen Kolben (7), der dem Eingangsdruck unterworfen ist, und eine Membran variabler Fläche aufweist, die dem gelieferten Druck unterworfen ist, und der weitere auf Druck ansprechende Teil (23) einen Kolben (18) aufweist, der in dem Gehäuse abdichtend verschiebbar und dem gelieferten Druck unterworfen ist.

4. Druckdosierventil nach Anspruch 2, dadurch gekennzeichnet, daß die bewegbare auf Druck ansprechende Einrichtung einen Kolben (44), der dem Eingangsdruck unterworfen ist, und eine Membran variabler Fläche aufweist, die dem gelieferten Druck unterworfen ist, der weitere auf Druck ansprechende Teil (48) einen Kolben aufweist, der in dem genannten Kolben (44) abdichtend verschiebbar und dem gelieferten Druck unterworfen ist.

5. Druckdosierventil nach Anspruch 3, dadurch gekennzeichnet, daß der auf Druck ansprechende Teil (23) durch eine Feder (19) in Richtung gegen einen Anschlag (34) vorgespannt ist.

6. Druckdosierventil nach Anspruch 4, dadurch gekennzeichnet, daß das Doppelventilgebilde (48, 54, 56) in einem Körper (53) getragen ist, der in dem Gehäuse (41, 42) abdichtend bewegbar ist zum Einstellen der Dosierung des Ventiles und einen Durchgang (57) aufweist für Verbindung mit einer Arbeitsmitteldruckzufuhröffnung (58).

**Revendications**

1. Une soupape de réglage de pression comportant un logement comprenant des moyens de commande (25, 26, 27, 28) actionnables pour régler la position dans le logement d'un siège de soupape de dépressurisation (12) ledit siège étant un siège de soupape de dépressurisation d'un ensemble de soupapes doubles à recouvrement (9, 10, 11, 12) monté sur un moyen sensible à la pression mobile (7, 4, 31, 35) dont une zone sensible à la pression est soumise à une pression d'entrée et dont une autre zone opposée sensible à la pression est soumise à une pression de sortie, une dite zone étant une zone efficace variable en fonction de la position dudit moyen sensible à la pression dans le logement, ledit siège de soupape de dépressurisation (12) étant couplé auxdits moyens de commande par un organe sensible à la pression supplémentaire (20, 23) soumis à une dite pression caractérisée en ce que ledit organe sensible à la pression supplémentaire est sollicité de telle façon que pour les pressions allant jusqu'à une valeur de consigne de la pression de sortie, la position de recouvrement dudit ensemble de soupapes doubles (9, 10, 11, 12) soit inchangée alors que pour des valeurs de pression au-delà de ladite valeur, la position de recouvrement change en modifiant par là ladite zone efficace variable dans la position de recouvrement, dans une direction qui augmente l'effet de la pression de sortie.

2. Une soupape de réglage de pression comprenant un logement (41, 42) comprenant des moyens de commande (59) actionnables pour régler la position dans la logement d'un ensemble de soupapes doubles à recouvrement (49, 54, 56), un siège de soupape de dépressurisation (49) pour ledit ensemble de soupapes doubles étant monté sur un moyen sensible à la pression mobile (43, 44, 45) présentant une zone soumise à une pression d'entrée et une autre zone opposée soumise à une pression de sortie, ladite zone opposée étant une zone efficace variable en fonction de la position dudit moyen sensible à la pression dans le logement, caractérisée en ce que ledit siège de soupape de dépressurisation (49) est monté sur un organe sensible à la pression supplémentaire (48) qui est monté à coulissement sur le premier moyen sensible à la pression mentionné et qui est soumis à une dite pression et en ce que ledit organe sensible à la pression supplémentaire est sollicité par rapport audit premier moyen sensible à la pression de telle façon que pour les pressions de sortie allant jusqu'à une valeur de consigne, la position de recouvrement dans le logement de recouvrement de l'ensemble de soupapes doubles soit inchangée et que pour une gamme de pressions au-delà de ladite valeur, la position de recouvrement change dans une direction qui est accompagnée par un changement de ladite zone dans une direction qui augmente l'effet de la pression de sortie à ladite position de recouvrement.

3. Une soupape de réglage de pression selon la revendication 1, caractérisée en ce que ledit moyen sensible à la pression mobile comprend un piston (7) soumis à ladite pression d'entrée et un diaphragme de surface variable soumis à la pression de sortie, ledit moyen sensible à la pression supplémentaire (23) comprenant un piston (18) monté à coulissement étanche dans le logement et étant soumis à la pression de sortie.

4. Une soupape de réglage de pression selon la revendication 2, caractérisée en ce que ledit moyen sensible à la pression mobile comprend un piston (44) soumis à ladite pression d'entrée et un diaphragme de surface variable soumis à la pression de sortie, ledit organe sensible à la pression supplémentaire (48) comprenant un piston monté à coulissement étanche dans ledit piston (44) et étant soumis à la pression de sortie.

5. Une soupape de réglage de pression selon la revendication 3, caractérisée en ce que ledit organe sensible à la pression supplémentaire (23) est sollicité vers une butée (34) par un ressort (19).

6. Une soupape de réglage de pression selon la revendication 4, caractérisée en ce que ledit ensemble de soupapes doubles (48, 54, 56) est monté dans un boîtier (53) monté à déplacement étanche dans le logement (41, 42) pour déterminer le réglage de la soupape et ayant un passage (57) de communication avec un orifice d'alimentation en pression de fluide (58).

FIG.1

FIG.2

FIG.3